# DEMANDE DE BREVET EUROPEEN

(11) **EP 1 336 949 A1**
(43) Date de publication de la demande: **20.08.2003**
(21) Numéro de dépôt: 03354015.4
(22) Date de dépôt: 18.02.2003
(51) Int. Cl.: G09G 3/20

(54) **Appareil avec dispositif d'affichage rectangulaire**

(30) Priorité: 18.02.2002 FR 0202008
(71) Demandeur: Purple Labs, 75011 Paris (FR)
(72) Inventeur: De Bast, Christophe, 73000 Chambéry (FR)
(74) Mandataire: Hecke, G.

(57) **Abrégé**

Le dispositif comporte un écran rectangulaire permettant un affichage en mode portrait (vertical) et en mode paysage (horizontal). Le basculement d'un mode d'affichage à l'autre est contrôlé en fonction des mesures fournies par deux accéléromètres (9a, 9b) permettant de déterminer l'inclinaison ou l'orientation du dispositif dans les mains d'un utilisateur. L'étalonnage de la position verticale du dispositif peut être réalisée automatiquement et/ou manuellement.

## Description

### Domaine technique de l'invention

L'invention concerne un dispositif comportant un écran sensiblement rectangulaire, permettant un affichage en mode portrait lorsque le dispositif est vertical et en mode paysage lorsque le dispositif est horizontal, des moyens de détection de l'inclinaison du dispositif et des moyens de basculement d'un mode d'affichage à l'autre en fonction de l'inclinaison détectée

### État de la technique

Les terminaux, notamment les terminaux mobiles faisant fonction de téléphone mobile et / ou d'assistant numérique personnel, sont munis d'un écran permettant d'afficher divers types d'informations. La nature des informations à afficher est en pleine mutation. Les téléphones mobiles, par exemple, remplissent de plus en plus souvent des fonctions auparavant associées à un ordinateur portable. C'est notamment le cas des agendas, des carnets d'adresse, de la communication avec un réseau de type Internet et du courrier électronique. La taille de l'écran devient ainsi primordiale.

Pour des raisons d'ergonomie, en particulier liées à la distance entre la bouche et l'oreille de l'utilisateur, le téléphone conserve une forme sensiblement rectangulaire et l'écran utilise toute la place disponible. Ainsi, les écrans, qui étaient généralement carrés, deviennent de plus en plus rectangulaires.

Certains terminaux comportent des moyens de détermination de l'orientation du terminal, de manière à faire basculer automatiquement l'affichage du mode portrait, lorsque le terminal est tenu verticalement au mode paysage, lorsqu'il est tenu horizontalement, et réciproquement, de manière à tirer parti au maximum des capacités d'affichage de l'écran. Deux types d'approche ont, jusqu'ici, été proposées pour la détermination de l'orientation du terminal.

Dans un premier type de terminaux, l'orientation du terminal est déterminée par des détecteurs d'inclinaison se présentant sous la forme de petits tubes contenant une faible dose d'un liquide conducteur, typiquement du mercure. En fonction de l'inclinaison du tube, le liquide se trouve à une extrémité du tube ou à l'autre. Deux contacts électriques sont situés côte à côte à chaque extrémité du tube. Lorsque le liquide est massé à une extrémité, il recouvre les deux contacts et permet à un courant électrique de circuler entre ces contacts. Il est ainsi possible, en surveillant le courant circulant d'un côté et de l'autre du tube, d'en déduire son inclinaison, et par conséquent, celle du terminal. Cette solution, bien qu'efficace, comporte des inconvénients majeurs qui ont empêché sa diffusion à une large échelle, et en particulier dans le domaine de la téléphonie mobile. En effet, comme le détecteur fonctionne sur un principe mécanique, il ne peut pas être miniaturisé, ce qui bannit son utilisation dans des domaines d'application où la taille est un élément crucial, comme c'est le cas en téléphonie cellulaire ou en électronique grand public. De plus, l'utilisation de tubes et de mercure comporte un double risque, lié à la fragilité du détecteur. Les téléphones portables sont habituellement conçus pour résister à des chutes successives de plus de 1,50m. Il s'agit de conditions strictes dans lesquelles un détecteur d'inclinaison de ce type a toutes les chances de se casser. Les conséquences sont doublement graves : non seulement le terminal n'est plus opérationnel, mais en plus, les risques de pollution par fuite de mercure sont très importants. De plus, ces détecteurs d'inclinaison sont difficiles à industrialiser, car ils ne peuvent pas être positionnés et soudés de façon automatique.

D'autres terminaux ont privilégié l'utilisation de capteurs électroniques, mieux adaptés aux domaines de la téléphonie mobile ou de l'électronique grand public, et plus particulièrement de capteurs de proximité (capteurs opto-électroniques, ou capteurs à inductance) pour déterminer le positionnement des mains de l'utilisateur sur le terminal. Cette approche repose sur l'hypothèse que l'utilisateur ne tient pas le terminal de la même façon, selon qu'il l'utilise en mode portrait ou en mode paysage. L'apparence de l'appareil doit être soignée pour inciter l'utilisateur à poser ses mains à proximité des capteurs. Cette solution a le mérite d'éviter les inconvénients mentionnés plus haut, mais elle a ses propres limitations. En effet, les petits terminaux, comme les téléphones cellulaires, les appareils photo numériques ou les baladeurs, sont souvent utilisés d'une seule main. Il n'est donc pas rare que l'utilisateur modifie l'inclinaison de l'appareil sans pour autant modifier sa prise. Dans de tels cas, le dispositif de basculement à base de capteurs de proximité est inopérant. De plus, l'emploi de gants en extérieur est, lui aussi, susceptible d'altérer la précision des capteurs de proximité et, par conséquent, d'inhiber le dispositif de basculement.

### Objet de l'invention

L'invention a pour but de surmonter les inconvénients ci-dessus et, en particulier, de permettre le basculement de l'affichage indépendamment de la façon dont le dispositif est tenu par l'utilisateur et sans, pour autant, utiliser des capteurs mécaniques, à la fois volumineux, fragiles et polluants.

Selon l'invention, ce but est atteint par un dispositif selon les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre un mode particulier de réalisation d'un terminal mobile dans lequel l'invention peut être mise en oeuvre.
Les figures 2 et 3 illustrent respectivement l'affichage en mode vertical et en mode horizontal.
La figure 4 représente un terminal mobile sous forme de schéma bloc.
La figure 5 représente un organigramme pouvant être mis en oeuvre dans l'unité centrale d'un terminal selon la figure 4 pour faire basculer l'affichage d'un mode à un autre.
La figure 6 illustre un terminal mobile selon l'invention, muni de deux accéléromètres.
La figure 7 représente un mode particulier de réalisation d'un organigramme permettant d'étalonner l'inclinaison du terminal selon la figure 6.
Les figures 8 et 9 illustrent deux types de déplacement d'un terminal selon la figure 6.
La figure 10 illustre les seuils de basculement de l'affichage d'un terminal selon l'invention.

### Description de modes particuliers de réalisation.

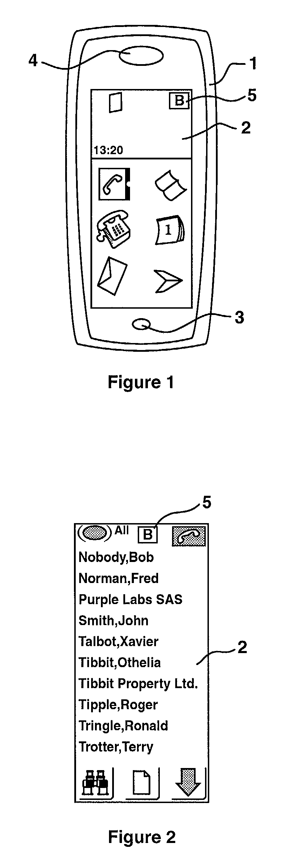

Le terminal mobile représenté à la figure 1 combine les fonctions d'un assistant personnel numérique (PDA) et d'un téléphone mobile. Il comporte un boîtier 1 muni, sur sa face avant, d'un écran 2 de grande taille, qui peut être un écran tactile. La face avant du boîtier comporte également un micro 3 et un haut-parleur 4, situés respectivement à la partie inférieure et à la partie supérieure de la face avant du boîtier. L'écran tactile 2 est un écran rectangulaire, le plus grand possible pour permettre l'entrée et l'affichage de données, notamment l'écriture au moyen d'un stylet, l'affichage de diverses informations, comme l'heure, l'affichage de messages courts ou de messages obtenus par courrier électronique, l'affichage d'icônes de programmes et de fonctions, d'icônes de réglage, d'un clavier à touches virtuelles pour la numérotation etc... À la mise en service, il peut, par exemple, comme représenté sur la figure 1, afficher un bureau sous la forme d'icônes correspondant aux diverses applications programmées dans le terminal.

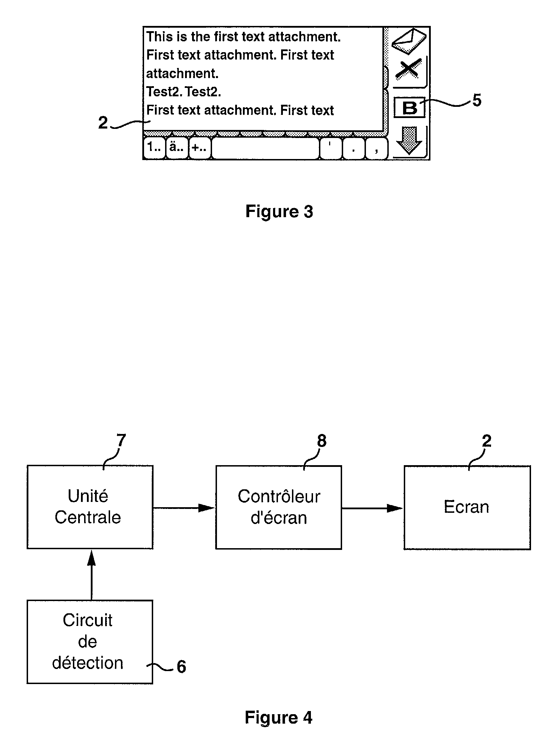

Les informations peuvent être affichées sur l'écran 2 soit en mode vertical (mode portrait) comme représenté à la figure 2, soit en mode horizontal (mode paysage), comme représenté à la figure 3. L'affichage vertical est, par exemple, le plus approprié à la consultation d'un répertoire. En effet, il permet d'afficher les unes sous les autres un grand nombre d'informations courtes constituant une liste, par exemple des noms. Par contre, l'affichage horizontal est plus approprié à la visualisation d'un texte car il minimise le nombre de retours à la ligne et permet une lecture plus confortable. Il est également plus approprié à la visualisation d'images plus larges que hautes.

Pour permettre à l'utilisateur de passer à son gré d'un mode d'affichage à l'autre, qu'il considère comme plus approprié à un instant donné, le terminal mobile peut être muni d'une touche de basculement. Cette touche peut être une touche classique disposée sur le boîtier ou une touche virtuelle de basculement 5, accessible à l'utilisateur, et affichée en permanence, sous forme d'une icône, sur l'écran tactile 2 (figures 1 à 3). Une fonction équivalente est accessible par l'intermédiaire d'un menu.

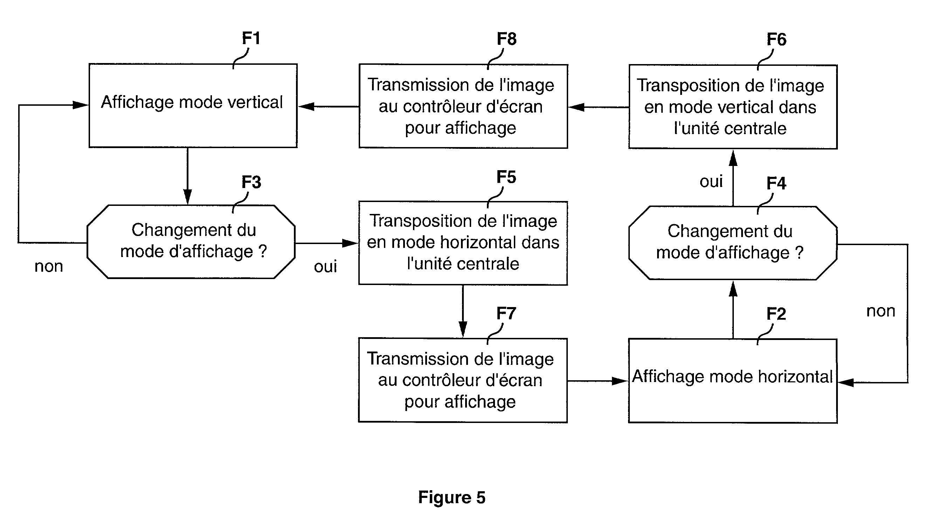

Comme représenté aux figures 4 et 5, l'affichage étant en mode vertical (étape F1) ou en mode horizontal (étape F2), un circuit de détection 6 de l'orientation du terminal transmet à une unité centrale 7 du terminal mobile des signaux de détection. Dans des étapes F3 et F4, suivant respectivement les étapes F1 et F2, l'unité centrale vérifie s'il doit y avoir changement du mode d'affichage. Si ce n'est pas le cas (sortie non de F3 ou F4), l'unité centrale se reboucle sur l'étape précédente et le mode d'affichage reste inchangé. Sinon (sortie oui de F3 ou F4), l'unité centrale transpose l'image à afficher, pixel par pixel, dans le nouveau mode d'affichage demandé, c'est-à-dire, en mode horizontal dans une étape F5 suivant l'étape F3 ou en mode vertical dans une étape F6 suivant l'étape F4. L'image transposée est ensuite transmise, dans des étapes respectives F7 ou F8, à un contrôleur d'écran 8 qui provoque l'affichage sur l'écran 2, respectivement en mode horizontal (F2) ou vertical (F1). Classiquement, le contrôleur d'écran 8 mémorise l'image qui lui a été transmise par l'unité centrale et la rafraîchit en permanence en appliquant les tensions appropriées aux lignes et aux colonnes de la matrice constituant l'écran.

L'unité centrale 6 peut mettre en mémoire les modes d'affichage les plus couramment utilisés par un utilisateur et ainsi restituer, pour chaque application, le mode d'affichage, vertical ou horizontal, préféré de l'utilisateur, c'est-à-dire le mode d'affichage le plus fréquemment utilisé pour une application donnée. Dans une variante de réalisation, il peut mettre en mémoire le dernier mode d'affichage utilisé pour une application donnée et sélectionner ce mode d'affichage lors d'une nouvelle sélection de cette application.

Selon l'invention, l'inclinaison du boîtier est détectée par des accéléromètres. Ces capteurs électroniques sont désormais utilisés en masse dans l'automobile, en particulier pour le déclenchement des airbags®. Ils sont suffisamment miniaturisés pour ne pas avoir d'incidence directe sur le volume de l'appareil dans lequel ils sont intégrés et ne sont pas plus sensibles aux chutes que n'importe quel composant électronique ce qui leur permet d'endurer les contraintes mécaniques classiques de l'électronique grand public. Ils peuvent, de plus, être placés automatiquement sur un circuit imprimé et être soudés automatiquement. Ils ne nuisent donc pas à l'industrialisation des produits qui les intègrent. Par ailleurs, ils ne polluent pas.

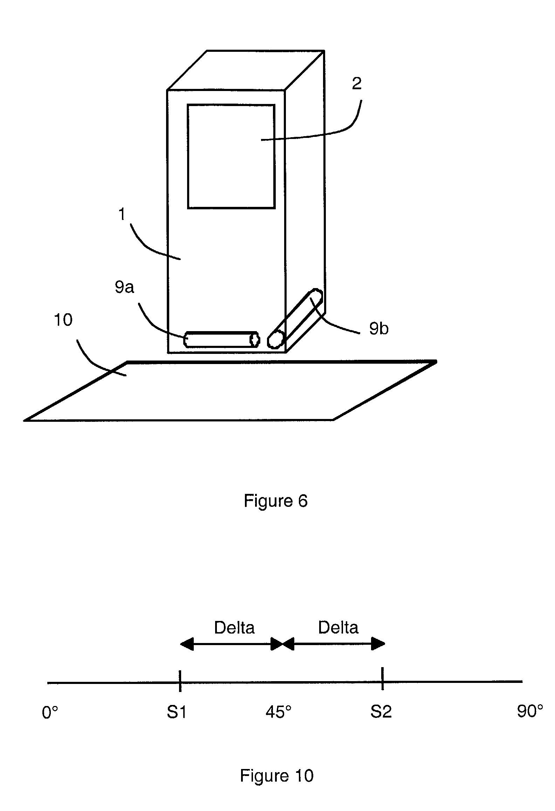

Le terminal illustré à la figure 6 comporte deux accéléromètres 9a et 9b, disposés perpendiculairement l'un à l'autre, dans un plan parallèle à une surface horizontale 10 lorsque le boîtier 1 du terminal est tenu verticalement. Un accéléromètre 9 fournit classiquement des signaux représentatifs des coordonnées, dans un plan, d'une masse se déplaçant dans ce plan en fonction des forces de gravité et d'accélération qui s'exercent sur l'accéléromètre. L'accéléromètre 9a permet en particulier à l'unité centrale de déterminer le roulis du terminal, c'est-à-dire ses mouvements de pivotement perpendiculairement à l'axe de l'accéléromètre 9a, tandis que l'accéléromètre 9b permet d'en mesurer le tangage, c'est-à-dire ses mouvements de pivotement perpendiculairement à l'axe de l'accéléromètre 9b. Les deux accéléromètres 9a et 9b étant orthogonaux, ils permettent à l'unité centrale 7 de déterminer les mouvements du boîtier en trois dimensions, en tenant compte à la fois des forces de gravité et d'accélération. L'unité centrale 7 peut ainsi déterminer l'orientation du boîtier et, en conséquence, celle de l'écran 2 dans l'espace.

Il est donc possible de déterminer l'inclinaison du terminal en fonction des différentes manipulations qu'il a subi, à condition d'étalonner correctement son inclinaison initiale.

L'étalonnage consiste essentiellement à déterminer la position verticale de l'appareil. Cet étalonnage peut être réalisé automatiquement ou manuellement. Dans un mode de réalisation préférentiel, la robustesse du système est accrue par la combinaison des deux modes d'étalonnage.

Pour réaliser un étalonnage automatique, les accéléromètres 9 sont utilisés pour déterminer la position verticale du boîtier, en tenant compte de l'influence de la force de gravité sur l'accéléromètre. En effet, dans la configuration des accéléromètres représentée à la figure 6, la position verticale du boîtier, c'est-à-dire une position horizontale des accéléromètres, est celle dans laquelle chacun des accéléromètres 9a et 9b mesure, en valeur absolue, une composante de gravitation la plus faible possible, c'est-à-dire un angle d'inclinaison faible. L'unité centrale 7 peut déterminer cette position en comparant les valeurs mesurées à un seuil prédéterminé, petit. On utilise la valeur absolue des valeurs mesurées car un accéléromètre fournit des signaux de mesure signés, dans lesquels le signe indique le sens de l'accélération.

Un petit interrupteur mécanique (non représenté) disposé à la base du boîtier 1 permet d'étalonner manuellement l'orientation du terminal. Lorsque l'utilisateur pose le terminal verticalement sur une table ou tout autre surface 10 horizontale, l'interrupteur se ferme et l'unité centrale 7 considère la position correspondante comme la position verticale.

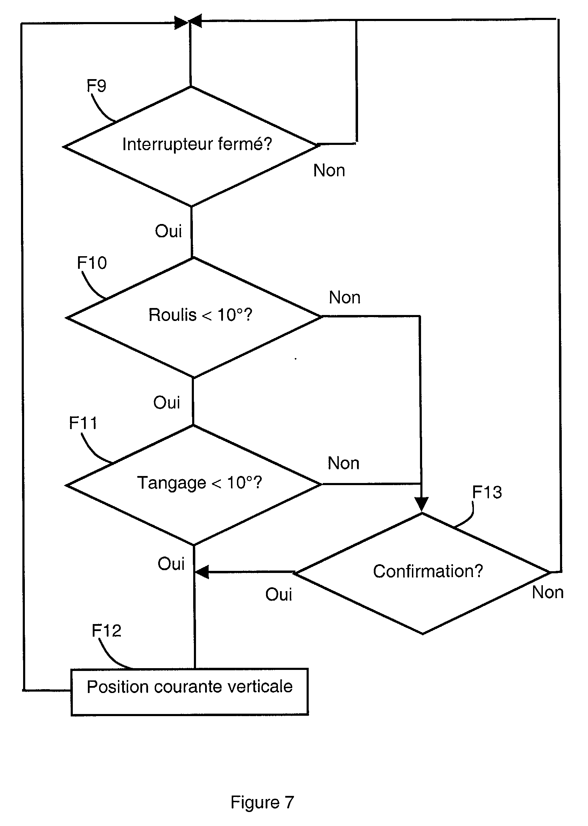

Il est cependant possible que l'utilisateur ferme l'interrupteur alors que le boîtier 1 n'est pas en position verticale. Une corrélation entre l'état fermé de l'interrupteur et l'étalonnage automatique permet d'écarter toute erreur d'étalonnage. Comme représenté à la figure 7, au cours de l'étalonnage, l'unité centrale 7 vérifie (étape F9) si l'interrupteur est fermé. Si ce n'est pas le cas (sortie Non de F9), il se reboucle sur l'entrée de l'étape F9. Sinon (sortie Oui de F9), il vérifie, dans une étape F10 si le roulis est inférieur à 10°. Si c'est le cas (sortie Oui de F10), il vérifie, dans une étape F11, si le tangage est inférieur à 10°. Si c'est le cas (sortie Oui de F11), cela signifie que l'inclinaison mesurée par les accéléromètres est proche de la verticale à plus ou moins 10 degrés sur chaque axe et que l'étalonnage automatique est en accord avec l'étalonnage manuel. L'unité centrale 7 prend alors immédiatement en compte l'étalonnage manuel et enregistre (étape F12) cette position comme la position verticale. Par contre, si le roulis ou le tangage est supérieur ou égal à 10° (sorties Non de F10 ou F11), l'unité centrale considère qu'il n'y a pas accord entre l'état fermé de l'interrupteur et les valeurs mesurées par les accéléromètres. Il demande alors (étape F13) à l'utilisateur de confirmer la position verticale du terminal. Si celui-ci confirme cette position (sortie Oui de F13), l'unité centrale l'enregistre dans l'étape F12. Sinon (sortie Non de F13), il se reboucle au début de la phase d'étalonnage, à l'entrée de l'étape F9.

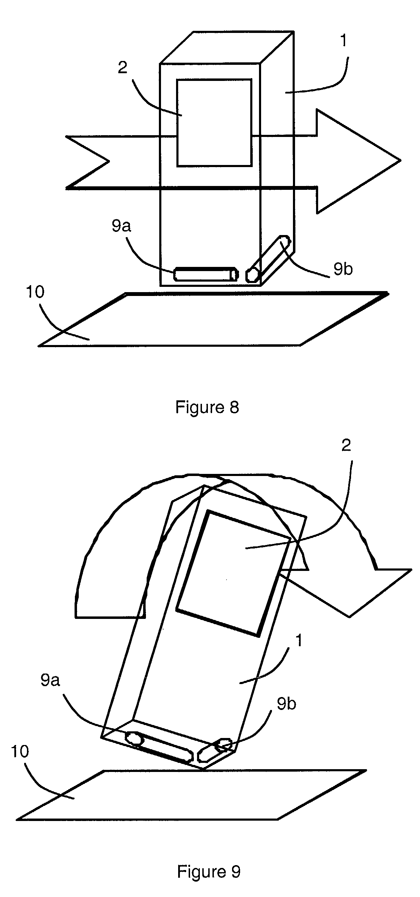

Une fois l'étalonnage effectué, la mesure des différentes accélérations mesurées par les accéléromètres 9a et 9b permet de suivre à la trace les différents mouvements imprimés au boîtier 1. En particulier, l'agencement des accéléromètres représenté à la figure 6 permet de faire la différence entre des translations dans l'espace et des inclinaisons, par corrélation entre les accélérations mesurées, selon des axes perpendiculaires, respectivement par les accéléromètres 9a et 9b. En effet, si le boîtier 1 subit une translation, comme représenté par la flèche sur la figure 8, l'accéléromètre 9a fournit des signaux représentatifs d'une accélération selon un axe, tandis qu'aucune accélération n'est mesurée sur l'axe perpendiculaire par l'accéléromètre 9b. En revanche, lorsque le boîtier 1 est incliné, comme représenté sur la figure 9, les deux accéléromètres 9a et 9b fournissent simultanément des signaux représentatifs d'une accélération.

L'unité centrale 7 peut ainsi déterminer à tout instant l'inclinaison du boîtier. Sur la base de ces observations, elle détermine le comportement de l'utilisateur et le mode d'affichage le plus approprié. Dans un mode de réalisation préféré, pour éviter des changements trop fréquents, l'unité centrale utilise deux seuils S1 et S2 différents pour déclencher le basculement de l'affichage. Comme représenté à la figure 10, un axe peut matérialiser le passage de l'angle d'inclinaison du boîtier de 0° en mode paysage à 90° en mode portrait. Le basculement d'un mode à l'autre n'est pas effectué lorsque l'angle d'inclinaison passe par 45°, mais lors du passage par les seuils S1 ou S2. L'unité centrale compare l'inclinaison du boîtier par rapport à un plan horizontal à un premier seuil S1, inférieur à 45° (45°-Delta), lorsque l'affichage est en mode portrait et à un second seuil S2, supérieur à 45° (45°+Delta), lorsque l'affichage est en mode paysage. Ainsi, l'unité centrale utilise toujours le seuil le plus éloigné du mode d'affichage utilisé pour déclencher un basculement dans l'autre mode d'affichage. Ainsi, 45°+Delta est l'angle de tolérance avant basculement de l'affichage.

Si l'écran 2 est un écran tactile, le détecteur d'orientation du boîtier peut être associé à une touche virtuelle de basculement permettant ainsi à l'utilisateur de modifier le mode d'affichage retenu.

L'invention s'applique à tout dispositif muni d'un écran rectangulaire et, plus particulièrement, à un terminal mobile faisant fonction de téléphone mobile et /ou d'assistant numérique personnel.

L'invention n'est pas limitée aux modes de réalisation particulier décrits ci-dessus. En particulier, l'interrupteur peut être un interrupteur normalement fermé, qui s'ouvre lorsque le terminal est posé verticalement sur une surface horizontale.

## Revendications

1. Dispositif comportant un écran sensiblement rectangulaire (2), permettant un affichage en mode portrait lorsque le dispositif est vertical et en mode paysage lorsque le dispositif est horizontal, des moyens de détection de l'inclinaison du dispositif et des moyens de basculement d'un mode d'affichage à l'autre en fonction de l'inclinaison détectée, dispositif **caractérisé en ce que** les moyens de détection de l'inclinaison comportent deux accéléromètres (9a, 9b) disposés perpendiculairement l'un par rapport à l'autre .

2. Dispositif selon la revendication 1, **caractérisé en ce qu'**il comporte des moyens d'étalonnage automatique en fonction des grandeurs fournies par les accéléromètres.

3. Dispositif selon l'une des revendications 1 et 2, **caractérisé en ce qu'**il comporte des moyens d'étalonnage manuel, comportant un interrupteur mécanique qui passe d'un premier à un second état lorsque le dispositif est posé verticalement sur une surface horizontale.

4. Dispositif selon la revendication 3, **caractérisé en ce que** les moyens d'étalonnage comportent des moyens de corrélation entre le second état de l'interrupteur et les grandeurs fournies par les accéléromètres.

5. Dispositif selon la revendication 4, **caractérisé en ce que** les moyens d'étalonnage comportent des moyens de prise en compte immédiate de l'étalonnage manuel si la corrélation est positive.

6. Dispositif selon la revendication 4, **caractérisé en ce que** les moyens d'étalonnage comportent des moyens de confirmation de la position du dispositif par un utilisateur si la corrélation est négative.

7. Dispositif selon l'une quelconque des revendications 1 à 6, **caractérisé en ce que** les moyens de basculement comportent des moyens de comparaison de l'inclinaison du dispositif, par rapport à un plan horizontal (10), à un premier seuil (S1), inférieur à 45° (45°-Delta), lorsque l'affichage est en mode portrait et à un second seuil (S2), supérieur à 45° (45°+Delta), lorsque l'affichage est en mode paysage.
